# EUROPEAN PATENT APPLICATION

(11) **EP 4 733 185 A1**
(43) Date of publication of application: **29.04.2026**
(21) Application number: 25210506.9
(22) Date of filing: 22.10.2025
(51) Int. Cl.: B62M 9/121, F16H 55/30

(54) **TOOTHED WHEEL FOR A ROCKER ARM OF A BICYCLE GEARSHIFT, ROCKER ARM AND BICYCLE ASSEMBLY COMPRISING SUCH A ROCKER ARM**

(30) Priority: 23.10.2024 IT 202400023583
(71) Applicant: Campagnolo S.r.l., 36100 Vicenza (VI) (IT)
(72) Inventor: Porro, Marco, 35142 Padova (IT)
(74) Representative: Montanari, Daniele

(57) **Abstract**

The invention relates to a toothed wheel (10) for a rocker arm of a bicycle gearshift, comprising a rotation axis (X) and a toothing (20) comprising a plurality of first teeth (22) and a plurality of second teeth (24) circumferentially alternated with the first teeth (22) and arranged so that each first tooth (22) is spaced apart from an adjacent second tooth (24) by a toothing pitch corresponding to the pitch of a chain (70) intended to be engaged with the toothed wheel (10). The first teeth (22) are axially wider than the second teeth (24) and are configured to engage with respective outer links (72) of the chain (70). The second teeth (24) are configured to engage with respective inner links (74) of the chain (70). The first teeth (22) have a top surface (23) that, in a radial direction, has a distance (D) from the rotation axis (X) greater than the radius (r_{R}) of a reference circumference (R) of the toothed wheel (10), i.e. the circumference on which, in a operating condition of correct engagement with the chain (70), the contact points between first teeth (22) and outer links (72) of the chain (70) and the contact points between second teeth (24) and inner links (74) of the chain (70) lie. The aforementioned distance (D) is such that, starting from an condition of incorrect engagement in which a predetermined first tooth (22) is engaged by an inner link (72) of the chain (70), the toothed wheel (10) reaches the operating condition engagement with the chain (70) after a rotation in the counter-clockwise direction of said predetermined first tooth (22) with respect to said rotation axis (X) by an angle (A) less than 360°.

## Description

The invention relates to a toothed wheel for a rocker arm of a bicycle gearshift (or derailleur), preferably of a racing bicycle.

The invention also relates to a rocker arm of a bicycle gearshift comprising such a toothed wheel and a bicycle assembly comprising such a rocker arm and a chain.

The bicycle gearshift to which reference is made in the context of this description and in the following claims is the rear one, i.e. the one used to move the chain among the different sprockets of the sprocket assembly associated with the rear wheel of the bicycle.

The rear gearshift typically comprises an articulated quadrilateral actuation linkage defined by a first body fixed to the bicycle frame, a second body that supports the rocker arm and a pair of articulating rods that connect the first body and the second body.

The rocker arm is moved by the articulated quadrilateral actuation linkage after having imparted a gearshifting command through a sheathed cable (mechanically-actuated rear gearshift) or an electric motor (electrically-actuated rear gearshift).

The rocker arm comprises an elastic element adapted for keeping the chain under tension irrespective of the sprocket engaged by the chain, a pair of plates arranged facing one another, a pair of pins fixedly connected to the plates and a pair of toothed wheels, arranged between the plates and intended to engage the chain. Each toothed wheel is rotatably mounted on a respective pin of the aforementioned pair of pins.

One of the toothed wheels, hereinafter indicated as "upper toothed wheel", is arranged close to the second body of the rear shifter.

The toothed wheels, as well as the sprockets of the sprocket assembly, have a plurality of teeth configured to engage the links of the chain. The latter is formed from an alternating succession of outer links and inner links (also called wide links and narrow links) connected together through respective connection pins. The distance between the centers of two consecutive links defines the pitch of the chain.

Rocker arms are known where the toothed wheels have an alternating arrangement of wide teeth and narrow teeth, the wide teeth being configured to engage the outer links of the chain and the narrow teeth being configured to engage the inner links of the chain. The wide teeth distinguish from the narrow ones in that they are thickened in the axial direction. Such toothed wheels allow the chain to be guided more precisely during gearshifting, thus improving gearshifting performance. Examples of toothed wheels of this type are described in US 20140162821A1 and US 20220306241A1.

The Applicant has observed that the provision in the toothed wheels of alternately wide and narrow teeth requires particular care whenever the user has to mount the chain on the rear shifter. Indeed, it is necessary to arrange the outer links of the chain at the wide teeth of the toothed wheel and/or the inner links of the chain at the narrow teeth of the toothed wheel so as to achieve a condition that will be indicated hereinafter as "condition of correct engagement" of the chain on the toothed wheel (such a condition is obtained when the wide teeth engage the outer links of the chain and the narrow teeth engage the inner links of the chain). Differently, the inner links could be at the wide teeth and, since the wide teeth typically have an axial width (or thickness) that is greater than the internal distance between the opposite plates of the inner link, the chain would not correctly engage the toothing of the toothed wheel, remaining suspended above the toothing, in a "floating" condition. Such a condition, hereinafter also indicated as "condition of incorrect engagement", causes an undesired noise during pedaling due to the sliding of the chain on the rocker arm, further to a loss of gearshifting performance.

In order to avoid being in a condition of incorrect engagement, or to shift from the condition of incorrect engagement to the operating condition of correct engagement, the user must manually turn the toothed wheel with respect to the chain until the narrow teeth of the toothed wheel match with the inner links of the chain and the wide teeth match with the outer links. Such an operation is indicated hereinafter as "manual rephasing".

The Applicant has observed that it is necessary to carry out a manual rephasing not only during assembly of the bicycle but also whenever the rear wheel of the bicycle needs to be changed.

The Applicant has also observed that in some cases, like for example during a race, the user needs to change the rear wheel extremely quickly. In this case the user does not have the time to also carry out a manual rephasing (or to do it with due care), with the risk of being in a condition of incorrect engagement. As already stated, in this condition the chain slides on the rocker arm, generating noise and friction, and the rear shifter is unable to ensure the desired gearshifting performance.

The Applicant has thought that in order to overcome the aforementioned drawbacks it would be desirable to achieve an automatic rephasing between toothed wheel and chain and has made a toothed wheel capable of ensuring such an automatic rephasing.

Hereinafter, the term "automatic rephasing" is used to indicate obtaining the operating condition of correct engagement of the chain on the toothed wheel from a condition of incorrect engagement between chain and toothed wheel simply through pedaling, thus without any manual movement of the toothed wheel with respect to the chain or vice-versa.

Throughout this description and in the following claims, the term "winding diameter/radius" of the chain is used to indicate the diameter/radius of the circumference on which the longitudinal axes of the connecting pins of the outer links and of the inner links of the chain lie when the toothed wheel is in a condition of correct engagement or in a condition of incorrect engagement.

The Applicant has perceived that starting from an initial condition of incorrect engagement it is possible to achieve an automatic rephasing only after a rotation of the toothed wheel not greater than 360°. Indeed, should the toothed wheel make a rotation equal to 360° the same identical initial conditions mentioned above would be returned, without ever being able to achieve the desired rephasing.

The Applicant has also perceived that in order to achieve an automatic rephasing starting from an initial condition of incorrect engagement it would be necessary to "delay" the linear movement of the chain with respect to the angular movement of the toothed wheel by a linear amount equal to the pitch of the chain.

The Applicant has thus thought about how to achieve such a "delay" after a rotation of the toothed wheel less than 360° and has found that this is possible by providing in the toothed wheel some features such that in the condition of incorrect engagement the chain has a sufficiently large winding diameter around the toothed wheel.

The Applicant has indeed found that, in the condition of incorrect engagement, the winding diameter of the chain increases as the angle of rotation that it is necessary for the toothed wheel to have a predetermined linear movement of the chain decreases.

The Applicant has thus thought of providing, in the toothed wheel, wide teeth having a radial size such that, in the condition of incorrect engagement, the chain has a winding diameter greater than the diameter of a reference circumference of the toothed wheel by a predetermined amount correlated to the rotation angle that it is desired for the toothed wheel to made in order to reach the condition of correct engagement, considering as reference circumference the circumference on which, in an operating condition of correct engagement with the chain, the contact points between first teeth and outer links of the chain and the contact points between second teeth and inner links of the chain lie.

The present invention therefore relates, in a first aspect thereof, to a toothed wheel for a rocker arm of a bicycle gearshift, comprising a rotation axis and a toothing comprising a plurality of first teeth and a plurality of second teeth, wherein:
- the first teeth are circumferentially alternated with the second teeth and arranged so that each first tooth is spaced apart from an adjacent second tooth by a toothing pitch corresponding to the pitch of a chain intended to be engaged with the toothed wheel;
- the first teeth are axially wider than the second teeth;
- the first teeth are configured to engage with respective outer links of the chain and the second teeth are configured to engage with respective inner links of the chain;

wherein the first teeth have a top surface that, in a radial direction, has a distance from the rotation axis greater than the radius of a reference circumference of the toothed wheel, wherein said reference circumference coincides with the circumference on which, in an operating condition of correct engagement with the chain, the contact points between first teeth and outer links of the chain and the contact points between second teeth and inner links of the chain lie;
characterized in that said distance is such that, starting from a condition of incorrect engagement in which a predetermined first tooth is engaged by an inner link of the chain, the toothed wheel reaches the operating condition of correct engagement with the chain after a rotation in the counter-clockwise direction of said predetermined first tooth with respect to said rotation axis by an angle less than 360°.

In a second aspect thereof, the present invention relates to a rocker arm of a bicycle gearshift comprising a toothed wheel according to the first aspect of the present invention.

In a third aspect thereof, the present invention relates to a bicycle assembly comprising a rocker arm according to the second aspect of the present invention and a chain.

Throughout this description and in the following claims, the terms clockwise or counter-clockwise are used to indicate the direction of rotation of the toothed wheel when the rocker arm is mounted on the bicycle and is seen from the same side on which the sprockets are mounted.

Moreover, when reference is made to certain values of certain angles, values measured on the toothed wheel in the direction of rotation of the toothed wheel during pedaling are meant.

Moreover, when reference is made to any range of values comprised between a minimum value and a maximum value, the aforementioned minimum and maximum values are deemed to be included in the aforementioned range, except if expressly stated otherwise.

Moreover, all of the ranges include any combination of the maximum and minimum values described and include any intermediate range, even if not expressly specifically described.

Even if not expressly indicated, any numerical value is deemed to be preceded by the term "about" to also indicate any numerical value that differs slightly from the one described, for example to take into account the dimensional tolerances typical of the field of reference.

The toothed wheel of the invention allows, starting from a condition of incorrect engagement, an automatic rephasing with less than one turn of the toothed wheel about its own rotation axis. This is obtained thanks to the provision of wide teeth (first teeth) that have a top surface placed at a predetermined distance from the rotation axis of the toothed wheel. Such a distance is greater than the radius of the reference circumference of the toothed wheel by a predetermined amount that is correlated to the winding radius of the chain in the condition of incorrect engagement.

Preferred features of the present invention are recited in the dependent claims. Such features can be freely combined with one another according to the specific requirements of the case.

Preferably, the axial width of the first teeth, taken at the reference circumference, is greater than the inner axial distance between two opposite plates of the inner links of the chain.

Preferably, said toothing has a plurality of teeth, given by the sum of the first teeth and the second teeth.

Preferably, said angle is reached when a predetermined number of teeth reaches the position previously occupied by said predetermined first tooth.

In accordance with the present invention, such a predetermined number of teeth is less than the number of teeth of the toothing.

Preferably, said toothing has a number of teeth comprised between 9 and 20.

In some embodiments, said angle is less than or equal to 180°, more preferably less than or equal to 100°, in some cases less than or equal to 60°.

In some preferred embodiments, said angle is comprised between 60° and 180°, more preferably between 60° and 100°.

Preferably, said predetermined number of teeth is less than or equal to 50%, more preferably less than or equal to 30%, in some cases less than or equal to 20% of the number of teeth of the toothing.

In some preferred embodiments, said predetermined number of teeth is comprised between 20% and 50%, more preferably between 20% and 30%, of the number of teeth of the toothing.

In a first preferred embodiment of the present invention, each of said first teeth is not chamfered close to said top surface.

Throughout this description and in the following claims, the term "chamfer" is used to indicate a radially outer portion of a tooth in which there are axially opposite connecting surfaces that join the top surface of the tooth with the front and rear walls of the tooth.

The absence of a chamfer results in an increase in the winding diameter of the chain in the condition of incorrect engagement.

In a second preferred embodiment of the present invention, each of said first teeth comprises a chamfer close to said top surface and the radially inner portion of said chamfer is, in the radial direction, at a distance from the rotation axis greater than the radius of said reference circumference.

The chamfer facilitates the engagement of the wide links on the first teeth, thus improving the hold of the chain on the toothed wheels. Due to the chamfer when the chain is in the condition of incorrect engagement the winding radius of the chain is less than in the absence of chamfer.

Preferably, each of said first teeth is symmetrical with respect to a middle transverse plane of the toothed wheel.

The toothed wheel can thus be mounted on the rocker arm without worrying about the orientation thereof.

In some embodiments, the second teeth have a top surface that is at a distance from the rotation axis substantially equal to or less than the distance of the top surfaces of the first teeth.

It is advantageous to provide first teeth with a high radial height so as to achieve the automatic rephasing even in operating conditions in which the number of teeth of the toothed wheel engaged by the chain is low, like for example when the rocker arm is in the position of maximum extension due to the fact that the chain engages the largest sprocket and the largest toothed crown.

Preferably, said toothed wheel is the upper toothed wheel of the rocker arm, i.e. the one on which the chain is initially arranged when the chain is associated with the rocker arm. However, the toothed wheel of the invention can also be the lower toothed wheel of the rocker arm.

Preferably, when the toothed wheel and the chain are in said condition of incorrect engagement, the chain has a winding radius on the toothed wheel correlated in a linear manner to the inverse of said predetermined number of teeth.

In other words, the greater the winding radius of the chain on the toothed wheel in said condition of incorrect engagement the quicker the automatic rephasing. Therefore, it is advantageous to make toothed wheels in which in said condition of incorrect engagement the winding radius of the chain on the toothed wheel is as high as possible, compatibly with the structural and functional constraints that it is necessary to take account of.

Further features and advantages of the present invention will become clearer from the following detailed description of preferred embodiments thereof, made with reference to the attached drawings and given for indicating and not limiting purposes. In such drawings:
- figure 1 is a side view of a bicycle gearshift mounted on a bicycle frame, wherein the bicycle gearshift comprises an upper toothed wheel according to a first embodiment of the present invention;
- figure 2 is a side view of the toothed wheel of figure 1, in an operating condition of correct engagement with a bicycle chain;
- figure 3 is a side view of a toothed wheel of the prior art, in a condition of incorrect engagement with a bicycle chain;
- figure 4 is a side view of the toothed wheel of figure 1, in a condition of incorrect engagement with the chain at the moment when automatic rephasing has just been achieved;
- figure 5 is a side view of a second embodiment of the toothed wheel according to the present invention, in a condition of incorrect engagement with the chain at the moment when automatic rephasing has just been achieved;
- figure 6 is a side view of the toothed wheel of figure 1;
- figure 7 is a cross section view of the toothed wheel of figure 1, taken according to the plane line VII-VII of figure 6;
- figure 8 is a side view of the upper toothed wheel of figure 2;
- figure 9 is a cross section view of the toothed wheel of figure 2, taken according to the plane line IX-IX of figure 8;
- figure 10 is a side view of a third embodiment of the toothed wheel according to the present invention;
- figure 11 is a cross section view of the toothed wheel of figure 10, taken according to the plane line XI-XI of figure 10;
- figure 12 is a side view of a fourth embodiment of the toothed wheel according to the present invention;
- figure 13 is a cross section view of the toothed wheel of figure 12, taken according to the plane line XIII-XIII of figure 12.

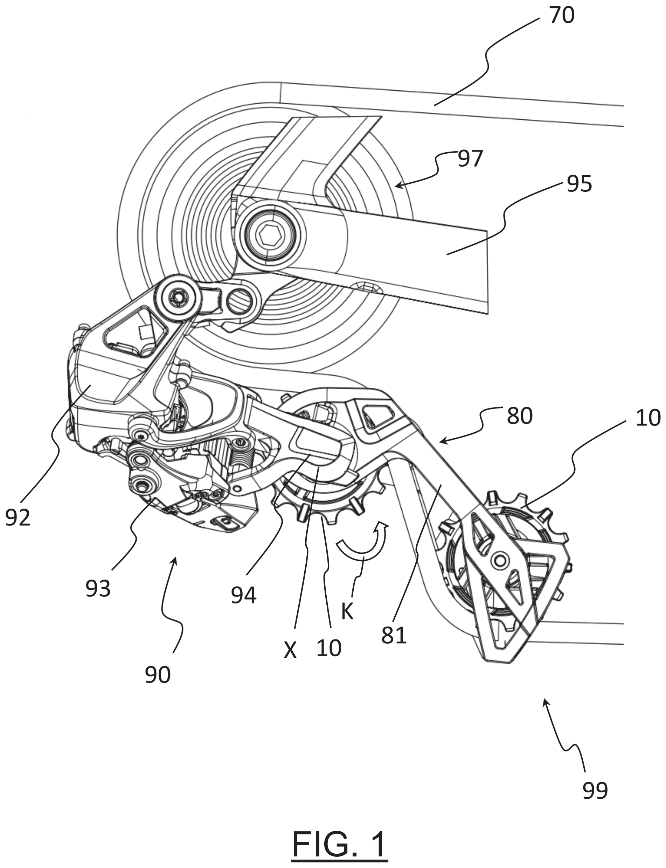

Figure 1 shows a rear gearshift of a bicycle, indicated with 90.

The bicycle gearshift 90 comprises a first body 92 fixed to the frame 95 of the bicycle, a second body 94 that supports a rocker arm 80 and a pair of articulating rods 93 that connect the first body 92 and the second body 94.

The rocker arm 80 comprises an upper toothed wheel 10 and a lower toothed wheel 10.

The upper toothed wheel 10 is arranged close to the second body 94 of the bicycle gearshift 90.

In the non-limiting embodiment shown in figure 1, both of the toothed wheels 10 are made according to the invention. However, there are embodiments in which only the upper toothed wheel 10 is made according to the invention, whereas the lower toothed wheel is of the known type.

Figure 1 also schematically shows a bicycle chain 70 that engages the toothed wheels 10, one of the sprockets of the sprocket assembly 97 associated with the rear wheel (not shown) of a bicycle and one of the toothed crowns (not shown) of the bicycle.

During pedaling, the chain 70 moves the upper toothed wheel 10 in the counter-clockwise direction (indicated with K in figure 1) around the respective rotation axis X and the lower toothed wheel 10 in the clockwise direction about the respective rotation axis.

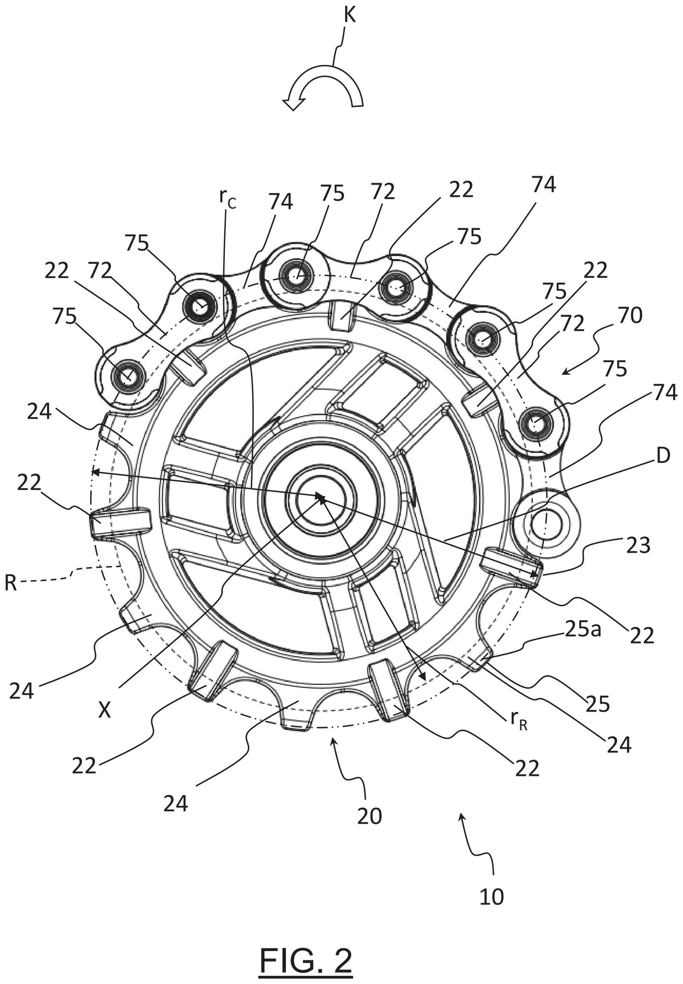

As shown for example in figure 2, the chain 70 comprises an alternating succession of outer links 72 and inner links 74. The outer links 72 are connected to the inner links 74 by connecting pins 75.

The chain 70 has a chain pitch defined as the distance between the centers of two consecutive links 72 and 74.

The rocker arm 80 and the chain 70 define a bicycle assembly, indicated with 99.

Figures 1, 2, 4, 6, 7 illustrate a first embodiment of the toothed wheel 10 according to the present invention.

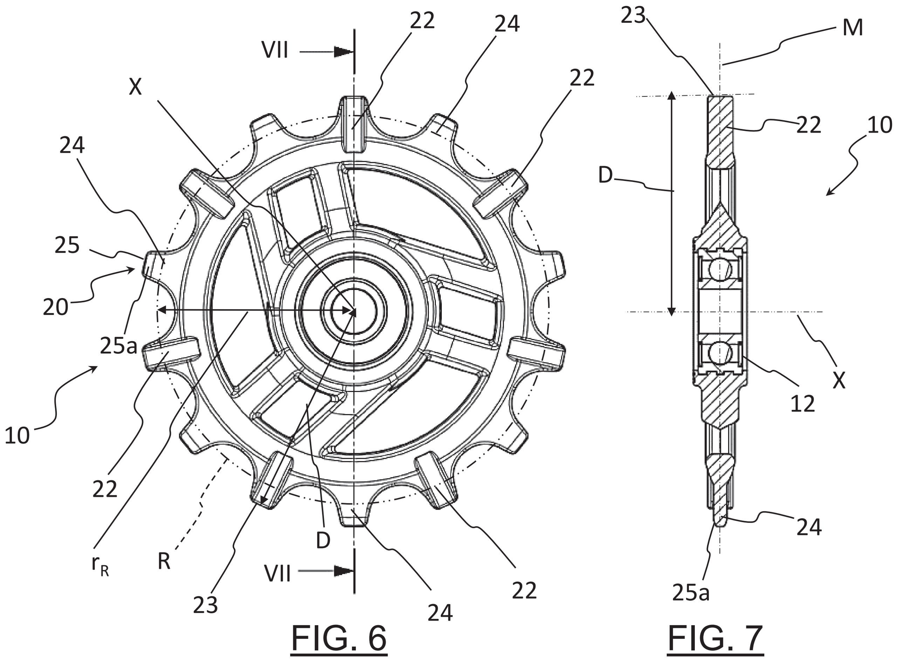

As shown in figure 7, a ball bearing 12 is provided in a radially inner position with respect to the toothed wheel 10. Such a bearing is arranged coaxially to the rotation axis X.

The toothed wheel 10 comprises a radially outer toothing 20 defined by a predetermined number of teeth that, preferably, is comprised between 9 and 20, 14 in the embodiment herein shown.

In particular, the toothing 20 is defined by a plurality of first teeth 22 (seven in the embodiment shown) and a plurality of second teeth 24 (seven in the embodiment shown) circumferentially alternated with the first teeth 22.

The first and second teeth 22, 24 are arranged so that each first tooth 20 is spaced apart from an adjacent second tooth 22 by a toothing pitch that is equal to the chain pitch.

The first teeth 22 are axially wider than the second teeth 24 and are configured to engage with respective outer links 72 of the chain 70, whereas the second teeth 24 are axially narrower than the first teeth 22 and are configured to engage with respective inner links 74 of the chain 70.

Figure 2 shows an operating condition of correct engagement in which the chain 70 has a predetermined winding radius r_{C} around the toothed wheel 10, the first teeth 22 engage with respective outer links 72 of the chain 70 and the second teeth 24 engage with respective inner links 74 of the chain 70.

In such an operating condition of correct engagement the contact points between the first teeth 22 and the outer links 72 of the chain 70 and the contact points between the second teeth 24 and the inner links 74 of the chain 70 lie on a reference circumference R having radius r_{R}.

The axial width of the first teeth 22, taken at the reference circumference R, is greater than the inner axial distance between two opposite plates of the inner links 74 of the chain 70 and less than the inner axial distance between two opposite plates of the outer links 72 of the chain 70.

As shown in figure 2, each first tooth 22 comprises a top surface 23 that, in the radial direction, is at a predetermined distance D from the rotation axis X. Such a distance D is greater than the radius r_{R} of the reference circumference R.

Each of the first teeth 22 is not chamfered close to the top surface 23.

As shown in figure 7, each of the first teeth 22 is symmetrical with respect to a middle transverse plane M of the toothed wheel 10.

The second teeth 24 have a top surface 25 arranged at a distance from the rotation axis X substantially equal to the aforementioned distance D.

Each of the second teeth 24 comprises a chamfer 25a close to the top surface 25.

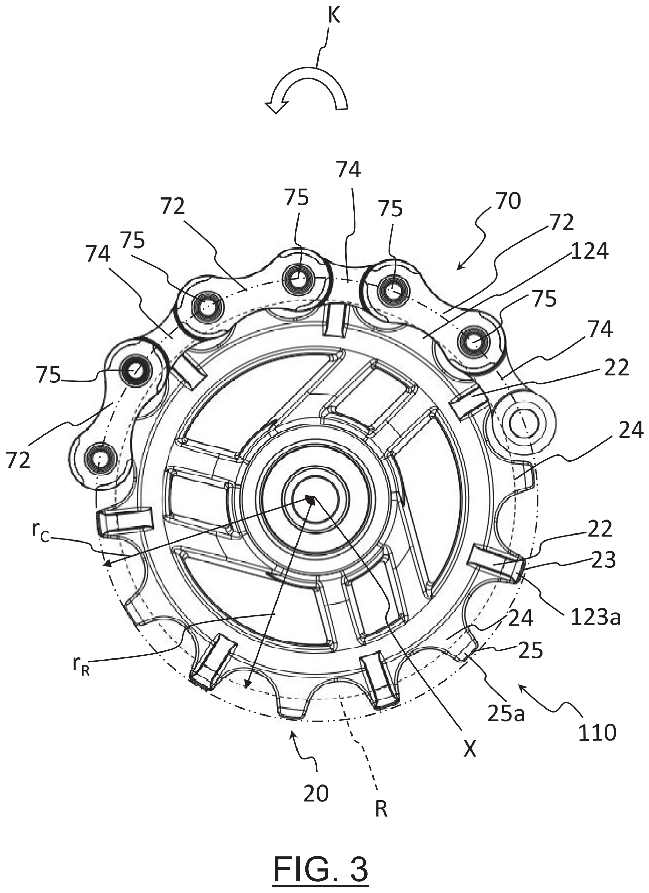

Figure 3 shows a toothed wheel 110 of the prior art.

The components of the toothed wheel 110 of figure 3 analogous or functionally equivalent to those of the toothed wheel 10 of figures 1, 2, 4, 6 and 7 are indicated with the same reference numeral and for their description reference should be made to the above description.

The toothed wheel 110 of figure 3 differs from the toothed wheel 10 of figures 1, 2, 4, 6 and 7 substantially because each of the first teeth 22 comprises a chamfer 123a close to the top surface 23.

In figure 3 the chain 70 is shown in a condition of incorrect engagement with the toothed wheel 110, with all of the first teeth 22 engaged by respective inner links 74 of the chain 70. The winding radius r_{C} of the chain 70 on the toothed wheel 110 is greater than the winding radius r_{C} shown in figure 2. In order to bring the chain 70 into a condition of correct engagement with the toothed wheel 110, i.e. with all of the first teeth 22 engaged by respective outer links 72 of the chain 70, it is necessary to carry out a manual rephasing.

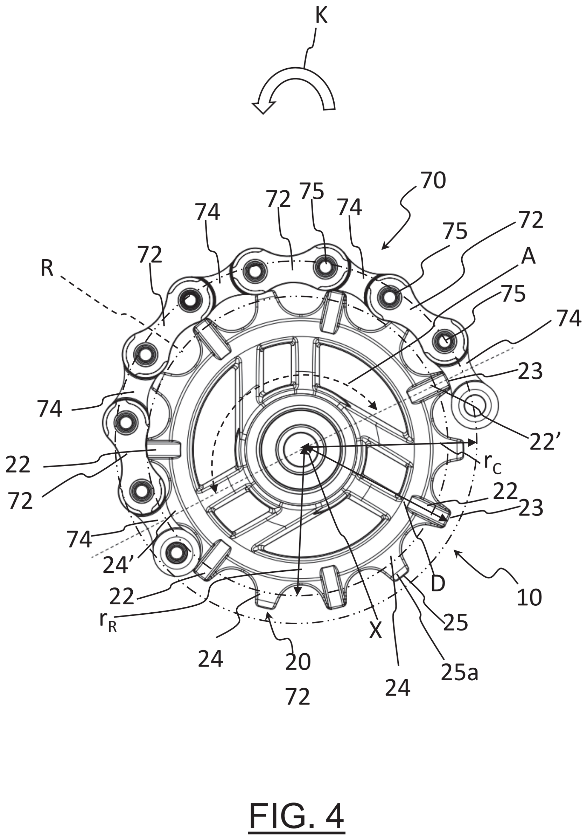

Figure 4, on the other hand, shows how the toothed wheel 10 of figure 2 makes possible to achieve an automatic rephasing of the chain 70 on the toothed wheel 10 as a consequence of a rotation of the toothed wheel in the counter-clockwise direction K of less than 360°.

In particular, figure 4 shows an initial condition of incorrect engagement in which a predetermined first tooth 22, indicated with 22', engages with an inner link 72 of the chain 70. In such a condition the winding radius r_{C} of the chain 70 on the toothed wheel 10 is greater than the winding radius r_{C} shown in figure 3. This is as a consequence of the fact that the first teeth 22 is not chamfered.

Figure 4 also shows that at a predetermined second tooth 24, indicated with 24', the automatic rephasing of the chain 70 on the toothed wheel 10, i.e. a correct engagement of a second tooth 24 in an inner link 74 of the chain 70, is achieved.

Figure 4 thus shows how by starting from an initial condition of incorrect engagement in which the predetermined first tooth 22' is engaged by the inner link 74 of the chain 70, the toothed wheel 10 reaches the operating condition of correct engagement with the chain 70 when the predetermined first tooth 22' rotates in the counter-clockwise direction K with respect to the rotation axis X until the predetermined second tooth 24' engages the fifth inner link 74 of the chain 70 starting from the one illustrated to the far right in figure 4. This occurs after a rotation of the predetermined first tooth 22' in the counter-clockwise direction K with respect to the rotation axis X by an angle A of less than 360°, in the specific case of figure 4 equal to 180°.

The angle A is therefore reached when a predetermined number N of teeth reaches the position previously occupied by the predetermined first tooth 22'. Such a predetermined number N of teeth is less than the number of teeth of the toothing 20 and, in the case of figure 4, is equal to 8, also counting the predetermined first tooth 22'.

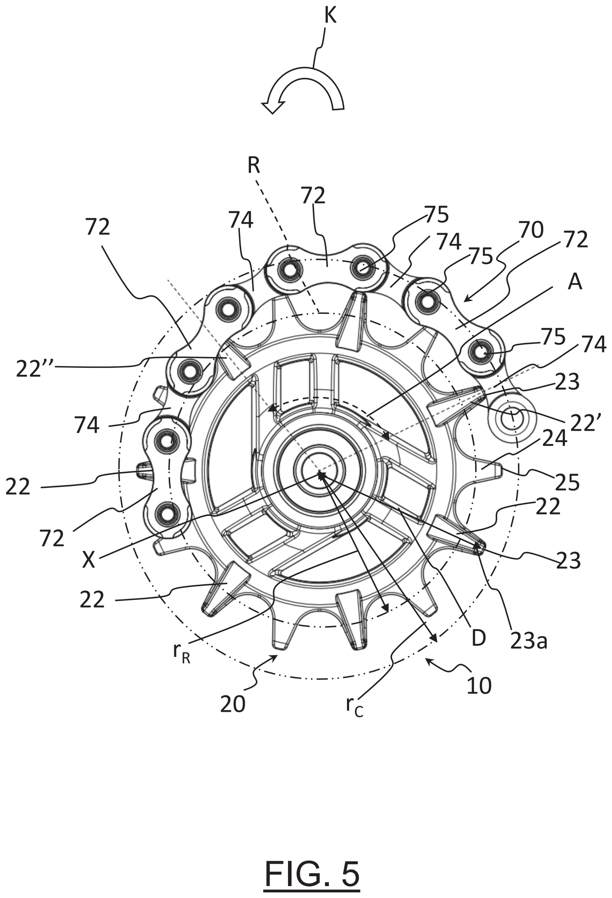

Figures 5, 8 and 9 show a second embodiment of a toothed wheel 10 according to the present invention.

The components of the toothed wheel 10 of figures 5, 8 and 9 analogous or functionally equivalent to those of the toothed wheel 10 of figures 1, 2, 4, 6 and 7 are indicated with the same reference numeral and for their description reference should be made to the above description.

The toothed wheel 10 of figures 5, 8 and 9 differs from the toothed wheel 10 of figures 1, 2, 4, 6 and 7 in that the radial extension of the first teeth 22 and of the second teeth 24 is greater than that of the first teeth 22 and of the second teeth 24 of the toothed wheel 10 of figures 1, 2, 4, 6 and 7.

In particular, figure 5 shows an initial condition of incorrect engagement in which a predetermined first tooth 22, indicated with 22', engages with an inner link 74 of the chain 70. In such a condition the winding radius r_{C} of the chain 70 on the toothed wheel 10 is greater than the winding radius r_{C} shown in figure 4. This is as a consequence of the fact that the first teeth 22 have a radial extension greater than that of the first teeth 22 of the toothed wheel 10 of figure 4.

Figure 5 also shows that at another predetermined first tooth 22, indicated with 22', the automatic rephasing of the chain 70 on the toothed wheel 10, i.e. a correct engagement of a first tooth 22 in an outer link 72 of the chain 70, is achieved.

Figure 5 thus shows how by starting from an initial condition of incorrect engagement in which the predetermined first tooth 22' is engaged by the inner link 74 of the chain 70, the toothed wheel 10 reaches the operating condition of correct engagement with the chain 70 when the predetermined first tooth 22' rotates in the counter-clockwise direction K with respect to the rotation axis X until the other predetermined first tooth 22" engages the third outer link 72 of the chain 70 starting from the one shown to the far right in figure 5. This occurs after a rotation of the predetermined first tooth 22' in the counter-clockwise direction K with respect to the rotation axis X by an angle A of less than 360°, in the specific case of figure 5 equal to about 100°.

The angle A is therefore reached when a predetermined number N of teeth reaches the position previously occupied by the predetermined first tooth 22'. Such a predetermined number N of teeth is less than the number of teeth of the toothing 20 and, in the case of figure 5, is equal to 5, also counting the predetermined first tooth 22'.

Comparing figures 4 and 5 it can be seen that when the toothed wheel 10 and the chain 70 are in the condition of incorrect engagement, the chain 70 has a winding radius r_{C} on the toothed wheel 10 correlated in a linear manner to the inverse of the aforementioned predetermined number N of teeth.

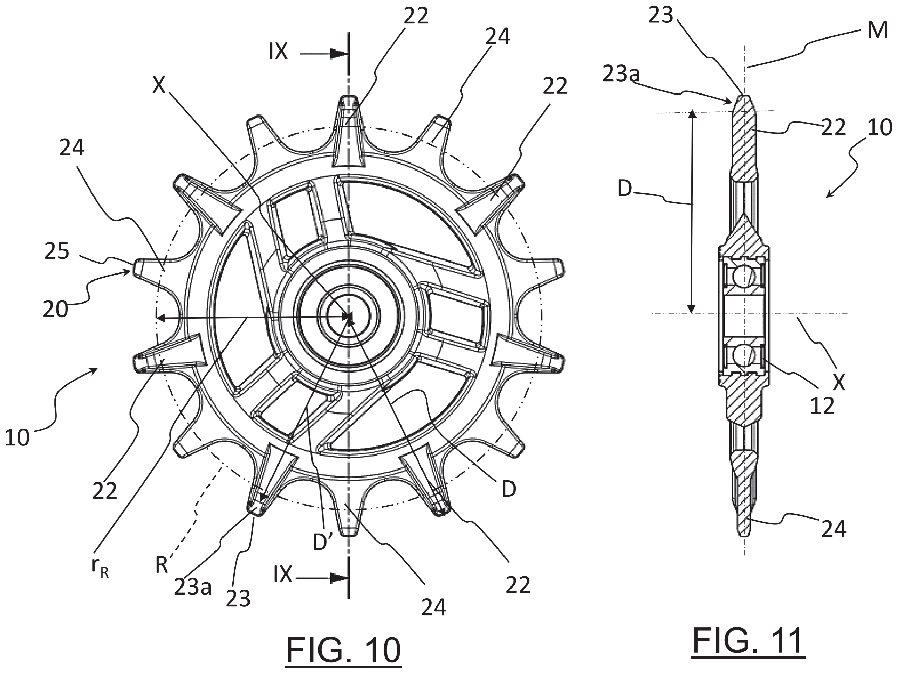

Figures 10 and 11 show a third embodiment of a toothed wheel 10 according to the present invention.

The components of the toothed wheel 10 of figures 10 and 11 analogous or functionally equivalent to those of the toothed wheel 10 of figures 5, 8 and 9 are indicated with the same reference numeral and for their description reference should be made to the above description.

The toothed wheel 10 of figures 10 and 11 differs from the toothed wheel 10 of figures 5, 8 and 9 because the first teeth 22 are provided with a chamfer 23a close to the top surface 23. Such a chamfer 23a ensures that the winding radius r_{C} of the chain 70 on the toothed wheel 10 in the condition of incorrect engagement is less than the winding radius r_{C} shown in figure 5.

The radially inner surface of the chamfer 23a is, in the radial direction, at a distance D' from the rotation axis X that is less than the distance D, while being still greater than the radius r_{R} of the reference circumference R.

The chamfer 23a of each of the first teeth 22, as well as each of the first teeth 22, is symmetrical with respect to the middle transverse plane M of the toothed wheel 10 and the latter comprises, in a radially inner position, a ball bearing 12 arranged coaxially to the rotation axis X, as shown in figure 11.

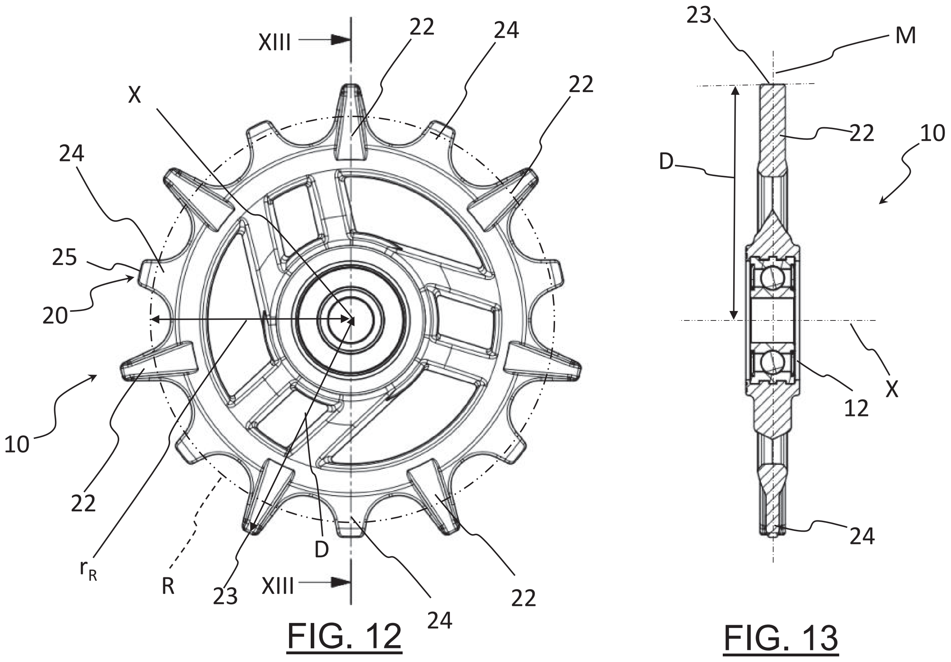

Figures 12 and 13 show a fourth embodiment of a toothed wheel 10 according to the present invention.

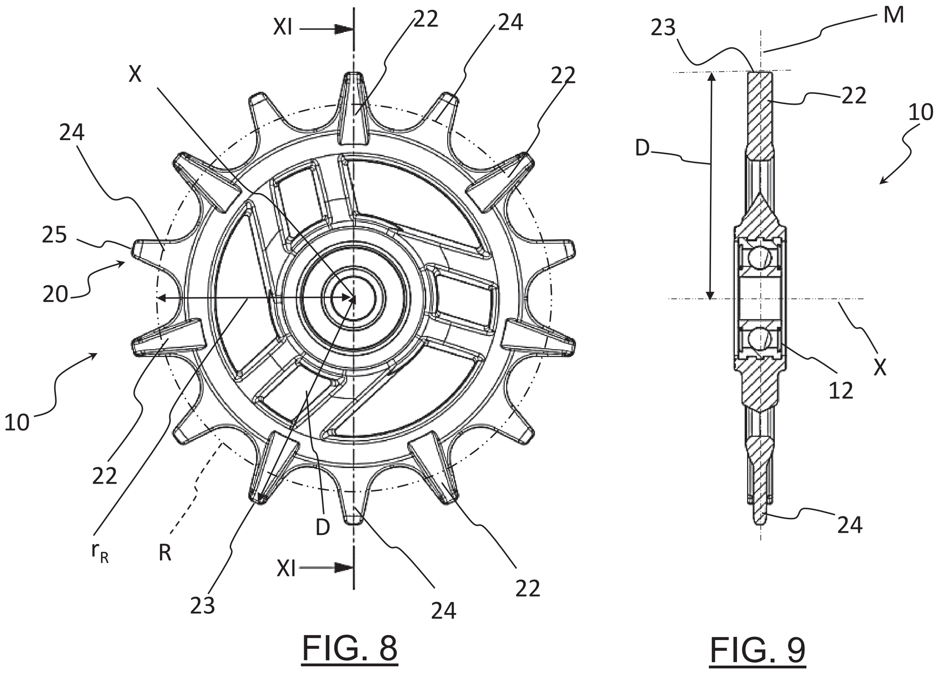

The components of the toothed wheel 10 of figures 12 and 13 analogous or functionally equivalent to those of the toothed wheel 10 of figures 8 and 9 are indicated with the same reference numeral and for their description reference should be made to the above description.

The toothed wheel 10 of figures 12 and 13 differs from the toothed wheel 10 of figures 8 and 9 substantially because the second teeth 24 have a top surface 25 at a distance from the rotation axis X that is less than that of the top surfaces 23 of the first teeth 22.

Also in this case each of the first teeth 22 is symmetrical with respect to the middle transverse plane M of the toothed wheel 10 and the latter comprises, in a radially inner position, a ball bearing 12 arranged coaxially to the rotation axis X, as shown in figure 13.

Of course, those skilled in the art can make numerous modifications and changes to the present invention in order to satisfy specific and contingent requirements, all of which being in any case within the scope of protection defined by the following claims.

## Claims

1. Toothed wheel (10) for a rocker arm (80) of a bicycle gearshift (90), comprising a rotation axis (X) and a toothing (20) comprising a plurality of first teeth (22) and a plurality of second teeth (24), wherein:
- the first teeth (22) are circumferentially alternated with the second teeth (24) and arranged so that each first tooth (22) is spaced apart from an adjacent second tooth (24) by a toothing pitch corresponding to the pitch of a chain (70) intended to be engage with the toothed wheel (10);
- the first teeth (22) are axially wider than the second teeth (24);
- the first teeth (22) are configured to engage with respective outer links (72) of the chain (70) and the second teeth (24) are configured to engage with respective inner links (74) of the chain (70);
wherein the first teeth (22) have a top surface (23) that, in a radial direction, had a distance (D) from the rotation axis (X) greater than the radius (r_{R}) of a reference circumference (R) of the toothed wheel (10), wherein said reference circumference (R) coincides with the circumference on which, in an operating condition of correct engagement with the chain (70), the contact points between first teeth (22) and outer links (72) of the chain (70) and the contact points between second teeth (24) and inner links (74) of the chain (70) lie;
**characterized in that** said distance (D) is such that, starting from a condition of incorrect engagement in which a predetermined first tooth (22) is engaged by an inner link (74) of the chain (70), the toothed wheel (10) reaches the operating condition of correct engagement with the chain (70) after a rotation in the counter-clockwise direction of said predetermined first tooth (22) with respect to said rotation axis (X) by an angle (A) less than 360°.

2. Toothed wheel (10) according to claim 1, wherein said toothing (20) has a plurality of teeth, given by the sum of the first teeth (22) and the second teeth (24), and wherein said angle (A) is reached when a predetermined number (N) of teeth reaches the position previously occupied by said predetermined first tooth (22), wherein said predetermined number (N) of teeth is less than the number of teeth of said toothing (20).

3. Toothed wheel (10) according to any one of the previous claims, wherein each of said first teeth (22) is not chamfered close to said top surface (23).

4. Toothed wheel (10) according to claim 1 or 2, wherein each of said first teeth (22) comprises a chamfer (23a) close to said top surface (23) and wherein the radially inner portion of said chamfer (23a) is, in the radial direction, at a distance (D') from the rotation axis (X) greater than the radius (r_{R}) of said reference circumference (R).

5. Toothed wheel (10) according to any one of the previous claims, wherein each of said first teeth (22) is symmetrical with respect to a middle transverse plane (M) of the toothed wheel (10).

6. Toothed wheel (10) according to any one of the previous claims, wherein said toothed wheel (10) is an upper toothed wheel (10) of the rocker arm (80).

7. Rocker arm (80) of a bicycle gearshift (90) comprising a toothed wheel (10) according to any one of the previous claims.

8. Bicycle assembly (99), comprising a rocker arm (80) according to claim 7 and a chain (70).

9. Bicycle assembly (99) according to claim 8 when depending on claim 2, wherein when the toothed wheel (10) and the chain (70) are in said condition of incorrect engagement, the chain (70) has a winding radius (r_{C}) on the toothed wheel (10) correlated in a linear manner to the inverse of said predetermined number (N) of teeth.
